# EUROPÄISCHE PATENTSCHRIFT

(11) **EP 3 521 964 B1**
(45) Veröffentlichungstag und Bekanntmachung des Hinweises auf die Patenterteilung: **17.08.2022**
(21) Anmeldenummer: 19154708.2
(22) Anmeldetag: 31.01.2019
(51) Int. Cl.: B66F 9/075

(54) **SYSTEM MIT EINEM FLURFÖRDERZEUG UND EINER FERNBEDIENEINHEIT FÜR DAS FLURFÖRDERZEUG**
SYSTEM COMPRISING AN INDUSTRIAL TRUCK AND A REMOTE CONTROL UNIT FOR SAID INDUSTRIAL TRUCK
SYSTÈME AVEC UN CHARIOT ÉLÉVATEUR ET UNE UNITÉ DE COMMANDE À DISTANCE POUR CE CHARIOT ÉLÉVATEUR

(30) Priorität: 02.02.2018 DE 102018102427
(43) Veröffentlichungstag der Anmeldung: 07.08.2019
(73) Patentinhaber: Jungheinrich Aktiengesellschaft, 22047 Hamburg (DE)
(72) Erfinder: Muhl, Till, 25451 Quickborn-Heide (DE); Daimer, Julia, 90765 Fürth (DE)
(74) Vertreter: Hauck Patentanwaltspartnerschaft mbB

(56) Entgegenhaltungen:
- EP-A1- 3 173 370
- FR-A1- 2 764 091
- KR-A- 20140 035 725
- US-A1- 2008 266 254
- US-A1- 2017 334 644

## Beschreibung

Die vorliegende Erfindung betrifft eine Fernbedieneinheit für ein Flurförderzeug sowie ein System, bestehend aus einer solchen und einem Flurförderzeug.

Eine ergonomische Ansteuerung von Flurförderzeugen ist ein Hauptziel bei deren Weiterentwicklung. Flurförderzeuge werden in der Regel in einer Arbeitsumgebung eingesetzt, die hohe Anforderungen an die Sicherheit der Bedienperson, aber auch an die Effizienz der Bedienung stellt. Für eine Fernsteuerung sind verschiedenste Ansätze bekannt. So ist es beispielsweise bekannt, einen fahrerlosen, sprachgesteuerten Schubmaststapler einzusetzen, der mit Worten und Gesten gesteuert wird, wobei mit Hilfe von 3D-Kameras seine Umgebung optisch erfasst wird, so dass sich der Fahrweg hieran anpassen kann.

Bei dem Einsatz von Kommissionierwagen ist es beispielsweise von der Firma Crown bekannt, einen Handschuh vorzusehen, auf dessen Rücken sich ein Bedienelement für eine Hupe und ein Notaus befindet, während die Vorwärtsfahrt durch einen am Zeigefinger angebrachten Knopf ausgelöst wird.

Weiterhin ist von der Firma Microsoft eine Hololens bekannt, bei der es sich um eine tragbare Brille handelt, in deren Sichtfeld zusätzliche Informationen eingeblendet werden. Die Steuerung erfolgt durch unterschiedliche Handzeichen der Bedienperson.

Aus DE 10 2008 025 632 B4 ist ein System zur Fernbedienung eines Flurförderzeugs mit einem mobilen Eingabe- und Sendegerät in Form eines programmierbaren Mobiltelefons, Smartphones oder PDA und einer am Flurförderzeug vorgesehenen Empfangseinrichtung bekannt geworden. Mit der Sende- und Empfangseinheit werden drahtlos Steuersignale gesendet, die an dem Flurförderzeug empfangen werden können. Das mobile Eingabe- und Sendegerät besitzt ein als Touchscreen ausgebildetes Display, auf dem Bedienelemente zur Steuerung des Flurförderzeugs graphisch dargestellt und durch Berührung bedient werden können.

Aus KR 2014 0035725 A ist eine Fernbedienung für einen Roboter bekannt mit Griffelementen für beide Hände, wobei ein über Tasten der Fernbedienung eingegebener oder über eine Scaneinheit gescannter Steuerungscode eine Steuerfunktion des Roboters auslöst.

EP 3 173 370 A1 betrifft ein über eine Fernbedienung steuerbares Flurförderzeug, wobei die Fernbedienung zum Erkennen von Impulsüberträgen auf eine Bedienfläche anhand einer Beschleunigung ausgebildet ist. Der erkannte Impulsübertrag wird als Signal an das Fahrzeug gesendet.

US 2017/0334644 A1 beschreibt ein über eine Fernbedienung steuerbares Flurförderzeug.

Der Erfindung liegt die Aufgabe zugrunde, eine Fernbedieneinheit für ein Flurförderzeug sowie ein System, bestehend aus der Fernbedieneinheit und dem Flurförderzeug dahingehend zu verbessern, dass bei ergonomischer Bedienung ein möglichst effizienter Einsatz möglich ist.

Erfindungsgemäß wird die Aufgabe durch ein System, bestehend aus einem Flurförderzeug und einer erfindungsgemäßen Fernbedieneinheit gelöst. Vorteilhafte Ausgestaltungen bilden die Gegenstände der Unteransprüche.

Die Fernbedieneinheit für ein Flurförderzeug ist vorgesehen und bestimmt dazu, mindestens einige Funktionen an dem Flurförderzeug aus einer räumlichen

Entfernung heraus zu steuern. Die Fernbedieneinheit besitzt eine Sendeeinheit, über die eine Funkverbindung zu dem Flurförderzeug und/oder einer übergeordneten Steuereinheit aufgebaut wird. Durch die Sendeeinheit werden u. a. Steuerbefehle an das Flurförderzeug gesendet. Die Fernbedieneinheit besitzt ferner ein Griffelement und ein Funktionselement. Das Griffelement ist mit einer Hand ergreifbar, wobei es mit einer Handinnenseite und zugehörigen Handfingern (Digiti II-V) unter Aussparung des Daumens (Digitus I) umgriffen werden kann. Das Funktionselement ist abgewinkelt an dem Griffelement angeordnet und weist mindestens ein erstes, mit dem Daumen der greifenden Hand bedienbares Bedienelement auf. Erfindungsgemäß weist das Funktionselement zusätzlich eine Scan- oder Leseeinheit auf, die Daten erfassen und über die Sendeeinheit weiterleiten kann. Der besondere Aspekt an der erfindungsgemäßen Fernbedieneinheit liegt darin, die Fernbedienung des Flurförderzeugs mit der Datenerfassung durch die Scan- oder Leseeinheit zu verbinden. Einer Bedienperson wird hierdurch eine sehr effektive Möglichkeit gegeben, einerseits das Fahrzeug aus der Entfernung zu steuern und andererseits die im Rahmen seiner anfallenden Arbeit zu erfassenden und weiter zu leitenden Daten aufzunehmen.

Die Fernbedieneinheit besitzt erfindungsgemäß an dem Griffelement ein zweites, von einem der Handfinger der greifenden Hand betätigbares Bedienelement. Auf diese Weise stellt die Fernbedieneinheit für den Benutzer in kompakter und effizient zu bedienender Form zwei Bedienelemente bereit, die ohne Umgreifen oder sonstige Bewegung allein mit den Fingern der greifenden Hand betätigt werden können.

In einer bevorzugten Weiterbildung der Fernbedieneinheit ist in dem Funktionselement und/oder dem Griffelement eine geführte Bewegungen erfassende Beschleunigungseinheit vorgesehen, die einer der erfassten Bewegungen ein Steuersignal zuordnen und über die Sendeeinheit senden kann. Die vorgesehene Beschleunigungseinheit verbindet einen dritten wesentlichen Aspekt mit der Fernbedieneinheit: Nicht nur können ohne Umgreifen mindestens zwei Bedienelemente betätigt und Daten aus der Arbeit erfasst und versendet werden, sondern zudem können auch Gesten und Handbewegungen als geführte Bewegungen erkannt und in Steuersignale umgesetzt werden. Hierdurch wird die Funktionalität der Fernbedieneinheit in intuitiver Weise erweitert, ohne schwierig zu unterscheidende Bedienkonzepte vorzusehen. Bevorzugt ist in der Beschleunigungseinheit ein drei-axialer Beschleunigungssensor vorgesehen, der eine geführte Bewegung erfassen kann. Eine geführte Bewegung unterscheidet sich von einer willkürlichen Bewegung oder einem Herabfallen der Fernbedieneinheit dadurch, dass die auftretenden Beschleunigungswerte innerhalb von vorbestimmten Grenzen verbleiben. Das Relativverhältnis der Beschleunigungswerte zueinander kann beispielsweise zur Erkennung der geführten Bewegung herangezogen werden. Hierzu ist vorgesehen, dass die Achsen des Beschleunigungssensors innerhalb des Griffelements eine definierte Ausrichtung besitzen. Der drei-achsige Beschleunigungssensor liefert für eine bessere Erkennung der Beschleunigungsbewegung bevorzugt nicht nur die Beschleunigungswerte entlang einer Achse, sondern auch das Vorzeichen der Beschleunigung, so dass dieser Beschleunigungssensor gelegentlich auch als 6- achsiger Beschleunigungssensor bezeichnet wird.

Erfindungsgemäß wird die Scan- oder Leseeinheit durch eine Betätigung des zweiten Bedienelements mit den Handfingern ausgelöst und erfasst bei einer fehlenden oder geringen Bewegung die zu übermittelnden Daten, was sich für eine ergonomische Bedienung als besonders vorteilhaft herausgestellt hat. Hierdurch wird für die Scan- oder Leseeinheit sichergestellt, dass nur bei Ruhe oder annähernder Ruhe der Fernbedieneinheit die zu lesenden Daten erfasst und weitergeleitet werden. Ein versehentliches oder unbeabsichtigtes Versenden von Daten wird hierdurch vermieden. In einer bevorzugten Ausgestaltung ist die Scan- oder Leseeinheit derart in der Fernbedieneinheit angeordnet, dass diese mit dem Griffelement auf den zu erfassenden Datenträger gerichtet werden kann.

In einer bevorzugten Ausgestaltung ist das Funktionselement mit einer Anzeige ausgestattet, die von der Scan- oder Leseeinheit empfangene Daten darstellen kann. Bevorzugt ist die Sendeeinheit als eine Sende- und Empfangseinheit ausgebildet, die Daten zu einem Auftrag und/oder zu Gütern von dem Flurförderzeug oder von einer übergeordneten Steuereinheit empfangen kann. Dabei ist die Anzeige dann dazu ausgebildet, die empfangenen Daten darzustellen.

Mit der als Sende- und Empfangseinheit ausgebildeten Sendeeinheit kann die Fernbedieneinheit sehr weitgehende Aufgaben eines Datenterminals für das Flurförderzeug übernehmen. Hierzu gehört beispielsweise die Darstellung von Aufträgen aus dem Lagerverwaltungssystem und/oder erfasste Ladung und Güter. Auch Warnhinweise, beispielsweise zu Gefahrgütern und dergleichen können so in ergonomischer Weise an der Fernbedieneinheit angezeigt werden.

In einer bevorzugten Ausgestaltung ist das Griffelement als länglicher Handgriff ausgestaltet, der zwei einander gegenüberliegende, bevorzugt parallel zueinander liegende Flachseiten und jeweils zwei Schmalseiten aufweist, wobei die Handinnenfläche mindestens an einer der Flachseiten und einer der Schmalseiten anliegt und die Handfinger (Digiti II-V) mindestens die andere Schmalseite umschließen. Das Griffelement wird ähnlich einem Werkzeuggriff oder einer Pistole umfasst und gehalten. Bevorzugt ist an der von den Handfingern umfassten Schmalseite das erste Bedienelement angeordnet. Hierbei kann es sich um einen Wippschalter handeln, der eine Hub- und Senkfunktion an dem Flurförderzeug auslöst. Weitere Schalter können an der Flachseite, die nicht von der Handinnenfläche bedeckt ist, angeordnet sein.

Bevorzugt ist das zweite Bedienelement, welches für eine Betätigung durch den Daumen vorgesehen ist, als ein Wippschalter ausgewählt, der eine Fahrtrichtungsauswahl ermöglicht. Ein solcher Wippschalter kann durch den Daumen intuitiv bedient werden und erlaubt durch ein schnelles Wechseln von Vorwärts- und Rückwärtsfahrt, eine präzise Ansteuerung des Flurförderzeugs.

In einer bevorzugten Weiterbildung des Fahrzeugs erfolgt als eine geführte Bewegung einer Schwenk- oder Drehbewegung um eine Längsachse des Handgriffs. Diese geführte Bewegung kann von der Bewegungseinheit erfasst und in einen Steuerbefehl für eine Lenkbewegung des Flurförderzeugs umgesetzt werden. Eine solche Bewegung ist intuitiv verständlich und erleichtert damit die Bedienung des Flurförderzeugs. Eine Drehbewegung kann beispielsweise um eine vertikale Achse erfolgen, die mit der Längsachse des Griffelements zusammenfällt. Die Schwenkbewegung kann hierbei beispielsweise durch eine Handbewegung mit ausgestrecktem Arm oder aus dem Handgelenk heraus erfolgen, bei der die Schwenkachse nicht mit einer Längsachse des Griffelements zusammenfällt, aber ungefähr parallel zu dieser ausgerichtet ist.

Die erfindungsgemäße Aufgabe wird ebenfalls durch ein System, bestehend aus einem Flurförderzeug und einer erfindungsgemäßen Fernbedieneinheit gelöst. Bevorzugt kann die Fernbedieneinheit die üblicherweise in einem Deichselkopf oder in einem Lenkgeber vorgesehenen Funktionen enthalten, so dass das Flurförderzeug als deichselloses Flurförderzeug ausgebildet sein kann. Hierdurch entsteht gerade für räumlich enge Arbeitsumgebungen ein hoch effektives und gut steuerbares Flurförderzeug.

Ein bevorzugtes Ausführungsbeispiel der Erfindung wird nachfolgend anhand von Figuren näher erläutert. Es zeigen:
- Fig. 1: ein deichselloses Hochhubfahrzeug in einer Schrägansicht, und
- Fig. 2: die erfindungsgemäße Fernbedieneinheit in einer perspektivischen Ansicht mit einer Hand.

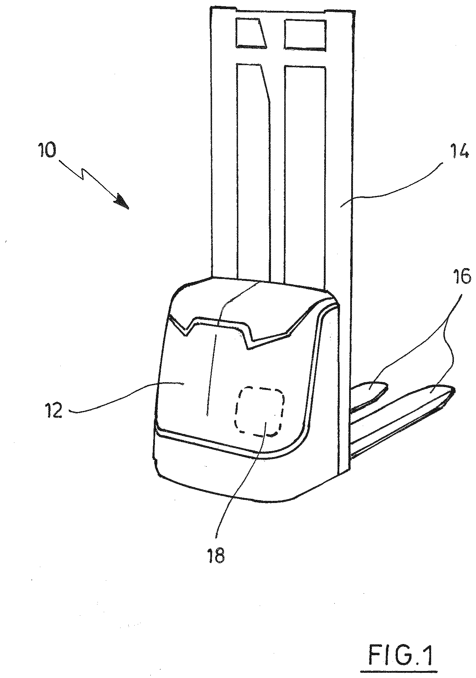

Fig. 1 zeigt ein Hochhubfahrzeug 10 mit einem Antriebsteil 12 und einem Lastteil 14. Das Lastteil 14 besitzt ein Hochhubgerüst, mit dem ein Lasttragmittel 16 angehoben werden kann. Das Flurförderzeug 10 besitzt eine Sende- und Empfangseinheit 18, die dazu ausgelegt ist, beispielsweise über Bluetooth oder einem anderen Funkstandard, Daten und Befehle mit einer Fernbedieneinheit 20 auszutauschen.

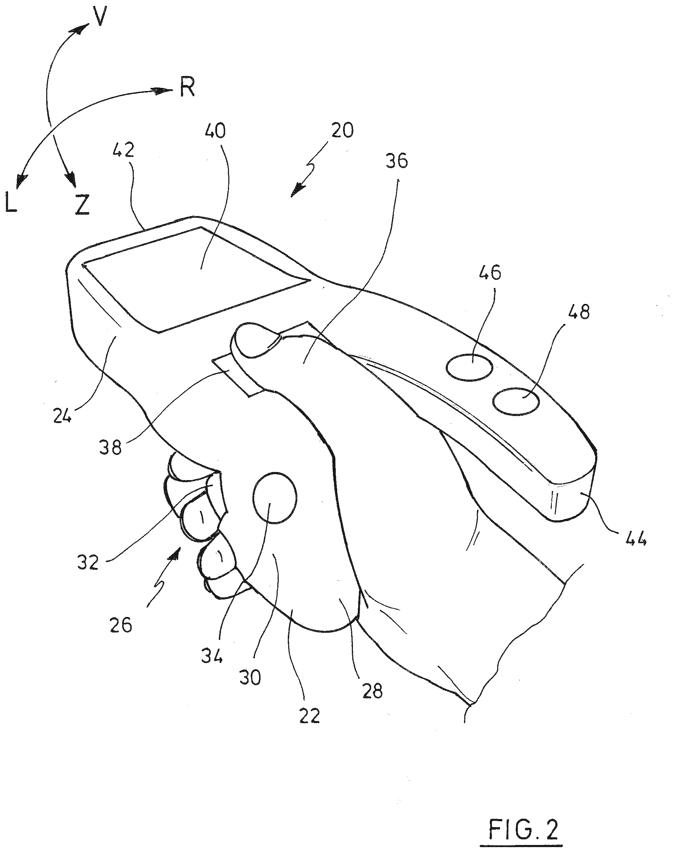

Die in Fig. 2 gezeigte Fernbedieneinheit 20 besitzt ein Griffelement 22 und ein Funktionselement 24. Griffelement 22 und Funktionselement 24 sind abgewinkelt zueinander angeordnet, so dass sie die Form einer Pistole nachempfinden. Das Griffelement 22 wird von der Handinnenfläche (nicht sichtbar) und den Handfingern 26 umfasst. Als Handfinger werden die Digiti II bis V bezeichnet, die gelegentlich auch als Langfinger bezeichnet werden. Das Griffelement 22 besitzt zwei Flach- und zwei Schmalseiten. In der Fig. 2 ist die rückseitige Schmalseite 28 und die von der Handinnenfläche fortweisende Flachseite 30 zu erkennen. Die Flachseite 30 liegt bei dem dargestellten Griff frei. An der vorderen Schmalseite ist ein zweites Bedienelement 32 angebracht, das über den Zeige- oder Mittelfinger betätigt werden kann. An der Flachseite 30 ist ein zusätzliches Bedienelement 34 vorgesehen. Dies kann durch den Daumen 36 betätigt werden, wobei der Daumen 36 dann einen annähernd geschlossenen Griff bildet. Alternativ können auch Direktwahlknöpfe, beispielsweise für den Daumen 36 in seiner dargestellten Position, vorgesehen sein. Diese Direktwahlknöpfe können beispielsweise als Hupe, Follow-Me und als Betätigung für einen Scanner ausgebildet sein.

Das Funktionselement 24 besitzt ein Bedienelement 38, das über den Daumen 36 betätigt werden kann. Das Bedienelement 38 ist als eine Wippe ausgebildet, auf der der Daumen 36 ruht, beispielsweise um eine Fahrtrichtung auszuwählen. Das Funktionselement 24 besitzt zusätzlich ein Display 40, auf dem eine Bedienperson anfallende Daten und Informationen ablesen kann. Ferner ist eine Scaneinheit 42 auf der von der Hand fortweisenden Seite des Funktionselements 24 vorgesehen. Die Scaneinheit 42 kann beispielsweise als ein Barcodescanner ausgebildet sein, mit dem Daten zu Lagerpositionen und Waren gelesen werden können. Die Scaneinheit 42 kann auch als eine Leseeinheit ausgebildet sein, die beispielsweise RFID-Transponder oder andere Kennzeichnungen lesen kann. Auf der zur Bedienperson weisenden Seite des Funktionselements 24 ist ein abstehender Steg 44 vorgesehen. Der Steg 44 erstreckt sich ungefähr bis zur Handwurzel und besitzt zwei weitere Bedienelemente 46, 48, die zur Betätigung mit der freien, also nicht die Fernbedienung haltenden Hand vorgesehen ist. Das dargestellte Ausführungsbeispiel ist eine Variante für Rechtshänder, eine entsprechende Variante für Linkshänder ist hierzu spiegelverkehrt, wobei grundsätzlich die gezeigte Variante auch von Linkshändern genutzt werden kann.

Bei der Benutzung der Fernbedieneinheit 20 ist vorgesehen, dass durch eine Betätigung des Zeige- oder Mittelfingerns der rechten Hand das Betätigungselement 32 ausgelöst wird. Mit dem Betätigungselement 32 kann über einen Wippschalter eine Hebe- und eine Senkfunktion an dem Flurförderzeug ausgelöst werden. Durch eine Betätigung des Bedienelements 34 mit dem Daumen 36 kann eine Funktion der Scaneinheit 42 ausgelöst werden. Ist das Betätigungselement 34 gehalten, so wird überprüft, ob die Bedienperson die Fernbedieneinheit ausreichend ruhig hält, erst dann wird die Scanfunktion betätigt und die zu scannenden Daten gelesen. Durch eine Betätigung des Betätigungselements 38 mit dem Daumen 36 kann die Fahrtrichtung gewählt werden. Informationen zu dem Fahrauftrag und den gescannten Daten können in dem Display 40 angezeigt werden. Für die Benutzung der Fernbedieneinheit hat es sich als besonders vorteilhaft herausgestellt, wenn das Bedienelement 48 als ein Knopf ausgebildet wird, der eine Hubfunktion an dem Fahrzeug auslöst. Der Knopf 46 bildet eine Follow-Me-Funktion, in der das Fahrzeug in einem vorbestimmten und einstellbaren Abstand der Fernbedieneinheit folgt.

Über den integrierten Beschleunigungssensor können geführte Bewegungen voneinander unterschieden werden. Beispielsweise kann eine Steuerung für das Flurförderzeug nach links oder nach rechts vorgesehen sein, in dem die Fernbedieneinheit in Richtung R nach rechts oder in Richtung L nach links verschwenkt wird. Die Schwenkbewegung kann hierbei eine Bewegung aus dem Handgelenk sein oder eine aus dem Unterarm oder gar dem ganzen Arm kommende Bewegung sein. Mit Hilfe der Schwenkbewegung wird für das Fahrzeug ein Lenkbefehl erzeugt und auch an dieses gesendet. Die Beschleunigungswerte können hierbei begrenzt sein, so dass eine unwillkürliche Bewegung oder eine Bewegung, die sich aus einer Körperdrehung ergibt, von der gewollten Bewegung unterschieden werden kann.

Auch ein fahrendes Fahrzeug in Fahrtrichtung nach vorn F und entgegen der Fahrtrichtung zurück, kann durch eine Handbewegung gesteuert werden. Hierzu wird die Fernbedieneinheit angehoben oder abgesenkt, wobei Anheben und Absenken bevorzugt aus dem Unterarm erfolgt, es kann jedoch auch durch eine Bewegung des Handgelenks ausgelöst werden.

### Bezugszeichenliste

- 10: Hochhubfahrzeug
- 12: Antrieb steil
- 14: Lastteil
- 16: Lasttragmittel
- 18: Sende- und Empfangseinheit
- 20: Fernbedieneinheit
- 22: Griffelement
- 24: Funktionselement
- 26: Handfinger
- 28: Schmalseite
- 30: Flachseite
- 32: erstes Bedienelement
- 34: Bedienelement
- 36: Daumen
- 38: zweites Bedienelement
- 40: Display
- 42: Scan- oder Leseeinheit
- 44: Steg
- 46: Bedienelement
- 48: Bedienelement

## Patentansprüche

1. System bestehend aus einem Flurförderzeug (10) und einer Fernbedieneinheit für das Flurförderzeug (10), wobei die Fernbedieneinheit folgendes aufweist:
- eine Sendeeinheit zum Aufbau einer Funkverbindung zu dem Flurförderzeug oder einer übergeordneten Steuereinheit,
- ein von einer Hand ergreifbares Griffelement (22), das mit einer Handinnenseite und zugehörigen Handfingern (26) unter Aussparung des Daumens (36) umgriffen werden kann, und
- ein Funktionselement (24), das abgewinkelt an dem Griffelement (22) angeordnet ist und mindestens ein erstes mit dem Daumen (36) der greifenden Hand bedienbares Bedienelement (38) aufweist,
wobei das Funktionselement (24) zusätzlich eine Scan- oder Leseeinheit (42) aufweist, wobei die Fernbedieneinheit dazu ausgebildet ist, über die Scan- oder Leseeinheit (42) Daten zu Lagerpositionen und Waren zu erfassen und über die Sendeeinheit weiterzuleiten.

2. System nach Anspruch 1, **dadurch gekennzeichnet, dass** die Scan- oder Leseeinheit (42) als Barcodescanner oder als RFID-Leseeinheit ausgebildet ist.

3. System nach Anspruch 1 oder 2, **dadurch gekennzeichnet, dass** das Griffelement (22) ein zweites von den Handfingern (26) der greifenden Hand betätigbares Bedienelement (34) aufweist.

4. System nach Anspruch 1, 2 oder 3, **dadurch gekennzeichnet, dass** in dem Funktionselement (24) und/oder dem Griffelement (22) eine eine geführte Bewegung erfassende Beschleunigungseinheit vorgesehen ist, die einer erfassten Bewegung ein Steuersignal zuordnen und über die Sendeeinheit senden kann.

5. System nach Anspruch 4, **dadurch gekennzeichnet, dass** ein 3-achsiger Beschleunigungssensor in der Beschleunigungseinheit vorgesehen ist.

6. System nach einem der Ansprüche 1 bis 5, **dadurch gekennzeichnet, dass** die Scan- oder Leseeinheit (42) durch eine Betätigung des zweiten Bedienelements (34) ausgelöst wird und bei fehlender Bewegung zu übermittelnde Daten erfasst.

7. System nach einem der Ansprüche 1 bis 6, **dadurch gekennzeichnet, dass** das Funktionselement eine Anzeige aufweist, die von der Scan- oder Leseeinheit (42) empfangene Daten darstellen kann.

8. System nach Anspruch 7, **dadurch gekennzeichnet, dass** die Sendeeinheit als eine Sende- und Empfangseinheit ausgebildet ist, die Daten zu einem Auftrag und zu Gütern von dem Flurförderzeug und/oder einer übergeordneten Steuereinheit empfangen kann, wobei die Anzeige dazu ausgebildet ist, die empfangenen Daten dazustellen.

9. System nach einem der Ansprüche 1 bis 8, **dadurch gekennzeichnet, dass** das Griffelement (22) eine längliche, griffförmige Gestalt besitzt, die zwei einander gegenüberliegende Flachseiten und jeweils zwei Schmalseiten aufweist, wobei die Handinnenfläche mindestens an einer der Flachseiten und einer der Schmalseiten anliegt und die Handfinger (26) mindestens die andere Schmalseite umschließen.

10. System nach Anspruch 9, **dadurch gekennzeichnet, dass** an der von den Handfingern (26) umfassten Schmalseite das erste Bedienelement (32) angeordnet ist.

11. System nach Anspruch 10, **dadurch gekennzeichnet, dass** das erste Bedienelement (32) als ein Wipp-Schalter ausgebildet ist, der eine Hub- und Senkfunktion an dem Flurförderzeug (10) auslöst.

12. System nach einem der Ansprüche 1 bis 11, **dadurch gekennzeichnet, dass** das zweite Bedienelement (38) als ein Wipp-Schalter für eine Fahrtrichtungswahl ausgebildet ist.

13. System nach einem der Ansprüche 1 bis 12, **dadurch gekennzeichnet, dass** eine geführte Schwenk- oder Drehbewegung um eine Längsachse des Griffelements (22) von der Bewegungseinheit erfasst und in einen Steuerbefehl für eine Lenkbewegung des Flurförderzeugs umgesetzt wird.

14. System nach einem der Ansprüche 1 bis 13, **dadurch gekennzeichnet, dass** das Flurförderzeug als ein deichselloses Flurförderzeug ausgebildet ist.

15. System nach einem der Ansprüche 1 bis 14, **dadurch gekennzeichnet, dass** mindestens ein Direktwahlknopf benachbart zu dem mit dem Daumen der greifenden Hand bedienbaren Bedienelement (38) vorgesehen ist.

## Claims

1. A system comprising an industrial truck (10) and a remote control unit for the industrial truck (10), wherein the remote control unit comprises the following:
- a transmitting unit for establishing a radio connection with the industrial truck or a higher-level controller,
- a handle element (22) which may be gripped by a hand and which may be encompassed by a hand inner face and associated fingers (26), leaving out the thumb (36), and
- a functional element (24) which is arranged so as to be angled-back on the handle element (22) and which comprises at least one first control element (38) which may be operated by the thumb (36) of the gripping hand,
wherein the functional element (24) additionally comprises a scanning or reader unit (42), wherein the remote control unit is configured to detect via the scanning or reader unit (42) data relative to storage positions and goods and to forward this data via the transmitting unit.

2. The system according to claim 1, **characterized in that** the scanning or reader unit (42) is configured as a barcode scanner or as an RFID reader unit.

3. The system according to claim 1 or 2, **characterized in that** the handle element (22) comprises a second control element (34) which may be actuated by the fingers (26) of the gripping hand.

4. The system according to claim 1, 2 or 3, **characterized in that** an acceleration unit detecting a guided movement is provided in the functional element (24) and/or the handle element (22), said acceleration unit being able to assign a control signal to a detected movement and transmit said control signal via the transmitting unit.

5. The system according to claim 4, **characterized in that** a three-axis acceleration sensor is provided in the acceleration unit.

6. The system according to one of claims 1 to 5, **characterized in that** the scanning or reader unit (42) is triggered by an actuation of the second control element (34) and detects data to be transmitted in the case of the absence of movement.

7. The system according to one of claims 1 to 6, **characterized in that** the functional element comprises a display which is able to depict data received by the scanning or reader unit (42).

8. The system according to claim 7, **characterized in that** the transmitting unit is configured as a transmitting and receiving unit which is able to receive data relative to an order and goods from the industrial truck and/or a higher-level controller, wherein the display is configured to depict the received data.

9. The system according to one of claims 1 to 8, **characterized in that** the handle element (22) comprises an elongated, handle-shaped design which comprises two flat sides which oppose one another and in each case two narrow sides, wherein the hand inner surface bears at least against one of the flat sides and one of the narrow sides and the fingers (26) enclose at least the other narrow side.

10. The system according to claim 9, **characterized in that** the first control element (32) is arranged on the narrow side encompassed by the fingers (26).

11. The system according to claim 10, **characterized in that** the first control element (32) is configured as a rocker switch which triggers a lifting and lowering function on the industrial truck (10).

12. The system according to one of claims 1 to 11, **characterized in that** the second control element (38) is configured as a rocker switch for selecting a direction of travel.

13. The system according to one of claims 1 to 12, **characterized in that** a guided pivoting or rotating movement about a longitudinal axis of the handle element (22) is detected by the movement unit and is converted into a control command for a steering movement of the industrial truck.

14. The system according to one of claims 1 to 13, **characterized in that** the industrial truck is configured as an industrial truck without a drawbar.

15. The system according to one of claims 1 to 14, **characterized in that** at least one direct selection button is provided adjacent to the control element (38) which may be operated by the thumb of the gripping hand.

## Revendications

1. Système constitué d'un chariot élévateur (10) et d'une unité de commande à distance pour le chariot élévateur (10), dans lequel l'unité de commande à distance présente les éléments suivants :
- une unité de transmission destinée à établir une liaison radio avec le chariot élévateur ou une unité de manœuvre prioritaire,
- un élément de préhension (22) apte à être saisi par une main, lequel peut être entouré avec la paume d'une main et par les doigts de la main (26) correspondants, à l'exception du pouce (36), et
- un élément fonctionnel (24) disposé de façon coudée sur l'élément de préhension (22) et présentant au moins un premier élément de commande (38) actionnable avec le pouce (36) de la main en train de saisir,
dans lequel l'élément fonctionnel (24) présente en outre une unité de balayage ou de lecture (42), dans lequel l'unité de commande à distance est conçue pour détecter des données relatives à la position de stockage et aux marchandises par le biais de l'unité de balayage ou de lecture (42) et les transmettre par le biais de l'unité de transmission.

2. Système selon la revendication 1, **caractérisé en ce que** l'unité de balayage ou de lecture (42) est conçue comme un lecteur de code-barres ou un lecteur RFID.

3. Système selon la revendication 1 ou 2, **caractérisé en ce que** l'élément de préhension (22) présente un deuxième élément de commande (34) actionnable avec les doigts de la main (26) de la main en train de saisir.

4. Système selon la revendication 1, 2 ou 3, **caractérisé en ce qu'**une unité d'accélération détectant un déplacement guidé est prévue dans l'élément fonctionnel (24) et/ou dans l'élément de préhension (22), laquelle peut attribuer un signal de manœuvre à un déplacement détecté et le transmettre par le biais de l'unité de transmission.

5. Système selon la revendication 4, **caractérisé en ce qu'**il est prévu un capteur d'accélération à trois axes dans l'unité d'accélération.

6. Système selon l'une des revendications 1 à 5, **caractérisé en ce que** l'unité de balayage ou de lecture (42) est activée par un actionnement du deuxième élément de commande (34) et détecte des données à transmettre en l'absence de déplacement.

7. Système selon l'une des revendications 1 à 6, **caractérisé en ce que** l'élément fonctionnel présente un écran capable de représenter des données reçues par l'unité de balayage ou de lecture (42).

8. Système selon la revendication 7, **caractérisé en ce que** l'unité de transmission est conçue comme une unité d'émission et de réception, capable de recevoir des données relatives à une commande et à des produits en provenance du chariot élévateur et/ou d'une unité de manœuvre prioritaire, dans lequel l'écran est conçu pour représenter les données reçues.

9. Système selon l'une des revendications 1 à 8, **caractérisé en ce que** l'élément de préhension (22) a une forme allongée du genre poignée, laquelle présente deux côtés plats opposés l'un à l'autre et respectivement deux côtés courts, dans lequel la surface inférieure de la main s'applique au moins sur l'un des côtés plats et l'un des côtés courts et les doigts de la main (26) entourent au moins l'autre côté court.

10. Système selon la revendication 9, **caractérisé en ce que** le premier élément de commande (32) est disposé sur le côté court entouré par les doigts de la main (26).

11. Système selon la revendication 10, **caractérisé en ce que** le premier élément de commande (32) est conçu comme un commutateur à bascule, lequel active une fonction de levage et d'abaissement sur le chariot élévateur (10).

12. Système selon l'une des revendications 1 à 11, **caractérisé en ce que** le deuxième élément de commande (38) est conçu comme un commutateur à bascule pour un choix de direction de circulation.

13. Système selon l'une des revendications 1 à 12, **caractérisé en ce qu'**un mouvement de pivotement ou de rotation guidé autour d'un axe longitudinal de l'élément de préhension (22) est détecté par l'unité de déplacement et converti en un ordre de manœuvre pour un mouvement de direction du chariot élévateur.

14. Système selon l'une des revendications 1 à 13, **caractérisé en ce que** le chariot élévateur est conçu comme un chariot élévateur sans timon.

15. Système selon l'une des revendications 1 à 14, **caractérisé en ce qu'**au moins un bouton de sélection directe est prévu à côté de l'élément de commande (38) actionnable avec le pouce de la main en train de saisir.
